(19) **Europäisches Patentamt / European Patent Office / Office européen des brevets**

(11) **EP 3 171 655 A1**

(12) # EUROPEAN PATENT APPLICATION
published in accordance with Art. 153(4) EPC

(43) Date of publication:
24.05.2017 Bulletin 2017/21

(51) Int Cl.:
*H04W 72/12* (2009.01)

(21) Application number: 14903503.2

(86) International application number:
**PCT/CN2014/092240**

(22) Date of filing: 26.11.2014

(87) International publication number:
**WO 2016/082115 (02.06.2016 Gazette 2016/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventor: **LI, Liangliang**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(54) ## SERVICE SCHEDULING METHOD AND DEVICE

(57) The present invention discloses a service scheduling method and apparatus, so as to improve a user-perceived rate in a non-full buffer scenario. The apparatus mainly includes: an acquiring unit, configured to acquire a first scheduling priority of a first service; a determining unit, configured to determine a second scheduling priority of the first service according to a data volume of the first service in a send buffer, an air interface transmission capability of user equipment that sets up the first service, and the first scheduling priority of the first service; and a scheduling unit, configured to schedule the first service according to the second scheduling priority.

FIG. 3

EP 3 171 655 A1

**Description**

**TECHNICAL FIELD**

The present invention relates to the field of wireless technologies, and in particular, to a service scheduling method and a device.

**BACKGROUND**

In a wireless communications system, multiple user equipments in one cell may simultaneously perform uplink or downlink communication with a base station. Each user equipment sets up one or more uplink or downlink services. Each service includes one or more packets and packets corresponding to each service have a different total length. A scheduler of the base station performs scheduling and allocates a system resource according to each service, or performs scheduling and allocates a system resource according to each user equipment. When scheduling is performed and a system resource is allocated according to the user equipment, one user equipment can be viewed as one service. The remaining steps are the same. Particularly, when each user equipment sets up only one service, scheduling according to user equipment is fully equivalent to scheduling according to a service. A manner of performing scheduling and allocating a system resource according to each service is used for description herein. One user equipment may be viewed as one service for processing herein according to the manner of performing scheduling and allocating a system resource according to each user equipment. The remaining steps are the same.

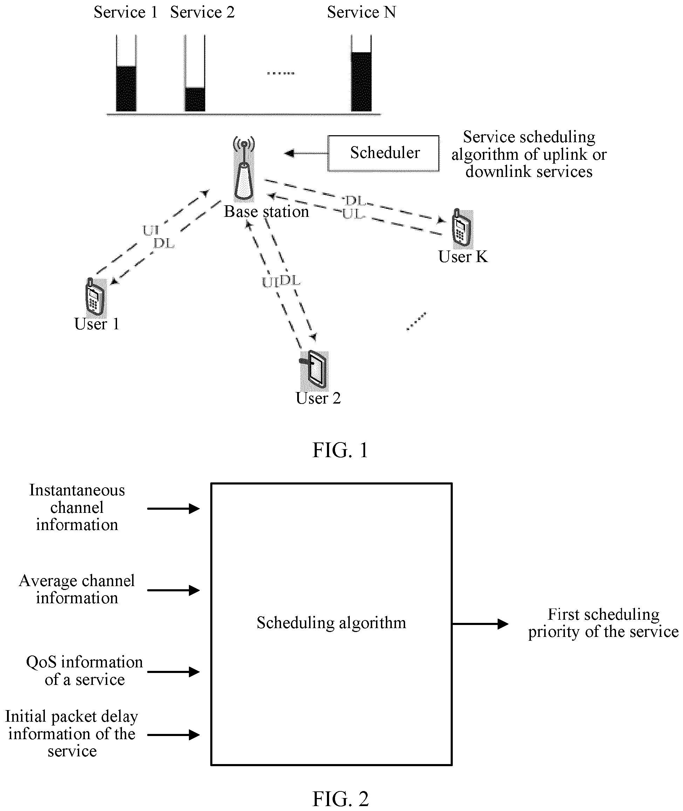

As shown in FIG. 1, a service 1 to a service N are uplink or downlink services that are set up by a mobile station MS 1 to MS K. The MS 1 to MS K communicate with a base station by using an air interface. A scheduler belongs to the base station. When multiple services (belonging to one or more user equipments) in a cell wait to be allocated a system resource to perform data transmission, the scheduler decides a scheduling sequence of the services and allocates system resources for the services.

The scheduler calculates a scheduling priority of each service according to some known parameters (for example, an instantaneous rate, an average rate, quality of service of a service, and an initial packet delay of a service) and a scheduling algorithm. The scheduler performs service scheduling and allocates a system resource according to the scheduling priority. A service with a higher priority is preferentially scheduled and is preferentially allocated a system resource. The system resource here refers to a resource that is limited in the wireless communications system and needs to be allocated to the services or that is used by the user equipment that sets up the services. For example, a physical channel resource (a physical resource block, a precoding matrix, an antenna, and the like) of a Long Term Evolution (Long Term Evalution, LTE) system, and a code channel resource (for example, Walsh Code) of a Universal Mobile Telecommunications System (Universal Mobile Telecommunications System, UMTS).

As shown in FIG. 2, the scheduler determines a first scheduling priority of each service according to any one of or a combination of instantaneous channel information, average channel information, QoS information of a service, and initial packet delay information of the service, and performs scheduling and allocates a system resource for each service according to the first scheduling priority. The instantaneous channel information or average channel information of the user equipment refers to the instantaneous channel information or average channel information of the user equipment that sets up the service. The instantaneous channel information includes a parameter such as an instantaneous rate, instantaneous spectral efficiency, an instantaneous channel quality index (Channel Quantity Index, CQI)/a modulation and coding scheme (Modulation Code Scheme, MCS), and an instantaneous multiple input multiple output (Multiple Input Multiple Output, MIMO) mode that can reflect an instantaneous channel quality of the user equipment. The average channel information includes a parameter such as an average rate, average spectral efficiency, an average CQI/MCS, and an average MIMO mode that can reflect an average channel quality of the user equipment.

Generally, the scheduler may include an uplink scheduler and a downlink scheduler. There is no difference in scheduling algorithm between the uplink scheduler and the downlink scheduler. A classical scheduling algorithm includes a proportional fair (Proportional Fair, PF) scheduling algorithm, a maximum rate (Max-Rate) scheduling algorithm, a round robin (Round Robin, RR) scheduling algorithm, a maximum-largest weighted delay first (Maximum-Largest Weighted Delay First, M-LWDF) scheduling algorithm, and an EXP/PF (EXPonential/Proportional Fair) scheduling algorithm.

In the following algorithms, assuming that $r_i(t)$ represents an instantaneous rate of a service or user equipment that sets up the service, $R_i(t)$ represents an average rate of a service or user equipment that sets up the service, and $\text{Priority}_i$ represents a scheduling priority of a service,

the PF scheduling algorithm is represented by using Formulas 1 and 2:

$$Priority_i = \frac{r_i(t)}{R_i(t)} \tag{1}$$

$$R_i(t) = (1 - \frac{1}{T}) \times R_i(t-1) + \frac{1}{T} \times r_i(t) \tag{2}$$

where $T$ is a constant. The PF scheduling algorithm considers both the instantaneous rate of the user equipment and the average rate of the user equipment; and can ensure fairness of the user equipment and also can obtain good cell rate performance.

The Max-Rate scheduling algorithm is represented by Formula 3:

$$Priority_i = r_i(t) \tag{3}.$$

The Max-Rate scheduling algorithm considers only the instantaneous rate of the user equipment. Every time, user equipment with a maximum instantaneous rate is scheduled. Therefore, the Max-Rate scheduling algorithm is the best in terms of the cell rate performance, but is the worst in terms of the fairness of the user equipment.

The round robin scheduling algorithm is represented by Formula 4:

$$Priority_i = \frac{1}{R_i(t)} \tag{4}.$$

In the round robin scheduling algorithm, a chance of performing round robin scheduling on each user equipment in terms of scheduling and allocating a system resource is equal, which means that the fairness of the user equipment is the best. The round robin scheduling algorithm does not consider the instantaneous rate of the user equipment at all. Therefore, the round robin scheduling algorithm is the worst in terms of the cell rate performance.

The M-LWDF scheduling algorithm is represented by Formula 5:

$$Priority_i = \alpha_i \times W_i(t) \times \frac{r_i(t)}{R_i(t)} \tag{5}$$

where $W_i(t)$ is an initial packet delay of a service $i$, that is, $\max\limits_{Packet\ k \in Service\ i} \{Time_{Now} - Time_{k,In}\}$. Packer $k \in$ Service $i$ represents all packets that belong to the service $i$. $Time_{Now}$ represents a current time. $Time_{k,In}$ represents a time when a packet $k$ enters a to-be-scheduled queue. $a_i = -\dfrac{\log(\delta_i)}{\tau_i}$, where $\tau_i$ represents a tolerable maximum waiting delay of the service $i$ and $\delta_i$ represents a maximum probability that an event $\{W_i(t) > \tau_i\}$ is allowed to occur. The M-LWDF scheduling algorithm considers an HOL, and also considers the instantaneous rate and the average rate. Therefore, the M-LWDF scheduling algorithm can ensure that a probability that a packet is lost because of timeout is relatively low, and also can obtain a relatively better cell rate performance at the same time when the fairness of the user equipment is reconciled.

The EXP/PF scheduling algorithm is represented by Formula 6:

$$Priority_{i} = \begin{cases} \exp(\dfrac{a_{i} \times W_{i}(t) + a\overline{W}(t)}{1 + \sqrt{a\overline{W}(t)}}) \times \dfrac{r(t)}{R(t)} & , i \in RT \\ \dfrac{w(t)}{M(t)} \times \dfrac{r(t)}{R(t)} & , i \in NRT \end{cases} \quad (6).$$

A real-time (Real Time, RT) service is mainly a service that is sensitive to a delay, for example, a video and a voice service. A non-real-time (Non-Real Time, NRT) service is mainly a service that is not very sensitive to a delay, for example, a File Transfer Protocol (File Transfer Protocol, FTP) download service. $i \in RT$ represents that the service $i$ is a real-time service. Definitions of $a_i$ and $W_i(t)$ are the same as the above.

$$a\overline{W}(t) = \frac{1}{N_{RT}} \times \sum_{i \in RT} a_{i} \times W_{i}(t) ,$$

where $N_{RT}$ represents a total quantity of the user equipments that set up the real-time service. $M(t)$ represents an average quantity of RT packets waiting to be scheduled in a cell at a time $t$.

$$w(t) = \begin{cases} w(t-1) - \varepsilon & , W_{max} > \tau_{max} \\ w(t-1) + \dfrac{\varepsilon}{k} & , W_{max} < \tau_{max} \end{cases} ,$$

where $\varepsilon$ and $k$ are constants, $W_{max} = \max\limits_{i \in RT}\{W_{i}(t)\}$, and $\tau_{max} = \max\limits_{i \in RT}\{\tau_{i}\}$.

In the EXP/PF scheduling algorithm, for a mixed service scenario in which both an RT service and an NRT service exist, when an initial packet delay of the RT service approaches a maximum waiting delay, a scheduling priority is generally higher than that of the NRT service. In the mixed service scenario, the EXP/PF scheduling algorithm can well ensure that the initial packet delay of the service does not exceed the maximum waiting delay of the service as much as possible, and can also reconcile the fairness of the user equipment and the cell rate performance.

Except the foregoing classical scheduling algorithms, there are also some other variations, as shown in Formula 7:

$$Priority_{i} = K \times \frac{[r_{i}(t)]^{\alpha}}{[R_{i}(t)]^{\beta}} \times [W_{i}(t)]^{\lambda} \quad (7)$$

where $K$, $\alpha$, $\beta$, and $\lambda$ are constants. There are many similar variation formulas, which are not enumerated herein again.

In the 3rd Generation Partnership Project (3rd Generation Partnership Project, 3GPP), a definition of a full buffer (Full Buffer) service and a definition of a non-full buffer (Non-full buffer) service are given. The full buffer service is defined as continuous transmission of uplink or downlink service data. The non-full buffer service is defined as burst transmission of uplink or downlink service data.

The foregoing Formulas 1 to 7 are all designed in the full buffer service. The instantaneous channel information (for example, the instantaneous rate or the instantaneous spectral efficiency), the average channel information (for example, the average rate or the average spectral efficiency), the initial packet delay information of the service, the quality of service (Quality of Service, QoS) information, and the like of the user equipment are used as input to calculate the scheduling priority of each service, and then the system resource is allocated to the service according to the scheduling priority.

In a non-full buffer scenario, an existing scheduling algorithm has a relatively low user-perceived rate, and user experience is affected.

## SUMMARY

Embodiments of the present invention provide a service scheduling method and a device, so as to improve a user-perceived rate in a non-full buffer scenario.

Specific technical solutions provided in the embodiments of the present invention are as follows:

According to a first aspect, a service scheduling apparatus is provided, including:

an acquiring unit, configured to acquire a first scheduling priority of a first service;
a determining unit, configured to determine a second scheduling priority of the first service according to a data volume of the first service in a send buffer, an air interface transmission capability of user equipment that sets up the first service, and the first scheduling priority of the first service; and
a scheduling unit, configured to schedule the first service according to the second scheduling priority.

With reference to the first aspect, in a first possible implementation manner, the second scheduling priority of the first service is inversely proportional to the data volume of the first service in the send buffer, is directly proportional to the air interface transmission capability of the user equipment that sets up the first service, and is directly proportional to the first scheduling priority of the service;
or,
the second scheduling priority of the first service is inversely proportional to the data volume of the first service in the send buffer, and is directly proportional to the air interface transmission capability of the user equipment that sets up the first service.

With reference to the first possible implementation manner of the first aspect, in a second possible implementation manner, the determining unit is specifically configured to:

determine a weight factor of the first service according to the data volume of the first service in the send buffer, and the air interface transmission capability of the user equipment that sets up the first service, where the weight factor of the first service is inversely proportional to the data volume of the first service in the send buffer, and is directly proportional to the air interface transmission capability of the user equipment that sets up the first service; and
determine the second scheduling priority of the first service according to the weight factor of the first service and the first scheduling priority of the first service, where the second scheduling priority of the first service is directly proportional to the weight factor of the first service.

With reference to any one of the first aspect to the second possible implementation manner, in a third possible implementation manner, the acquiring unit is specifically configured to:

determine the first scheduling priority of the first service according to any one of or a combination of instantaneous channel information, average channel information, quality of service QoS information, and initial packet delay information of the first service; or
acquire the first scheduling priority that is preset for the first service.
With reference to any one of the first aspect to the third possible implementation manner, in a fourth possible implementation manner, the scheduling unit is specifically configured to:
schedule the first service and allocate a system resource within a scheduling period in descending order of the second scheduling priority.

With reference to the fourth possible implementation manner of the first aspect, in a fifth possible implementation manner, the determining unit is further configured to:

after the scheduling unit schedules the first service and allocates the system resource within the scheduling period in descending order of the second scheduling priority, and before a next scheduling period arrives, determine the second scheduling priority of the first service again.

With reference to any one of the first aspect to the second possible implementation manner, in a sixth possible implementation manner, the air interface transmission capability of the user equipment is either of or a combination of instantaneous channel information of the user equipment and average channel information of the user equipment.

According to a second aspect, a service scheduling method is provided, including:

acquiring a first scheduling priority of a first service;
determining a second scheduling priority of the first service according to a data volume of the first service in a send buffer, an air interface transmission capability of user equipment that sets up the first service, and the first scheduling priority of the first service; and
scheduling the first service according to the second scheduling priority.

With reference to the second aspect, in a first possible implementation manner, the second scheduling priority of the first service is inversely proportional to the data volume of the first service in the send buffer, is directly proportional to the air interface transmission capability of the user equipment that sets up the first service, and is directly proportional to the first scheduling priority of the service;
or,
the second scheduling priority of the first service is inversely proportional to the data volume of the first service in the send buffer, and is directly proportional to the air interface transmission capability of the user equipment that sets up the first service.

With reference to the first possible implementation manner of the second aspect, in a second possible implementation manner, the determining a second scheduling priority of the first service according to a data volume of the first service in a send buffer, an air interface transmission capability of user equipment that sets up the first service, and the first scheduling priority of the first service includes:

determining a weight factor of the first service according to the data volume of the first service in the send buffer, and the air interface transmission capability of the user equipment that sets up the first service, where the weight factor of the first service is inversely proportional to the data volume of the first service in the send buffer, and is directly proportional to the air interface transmission capability of the user equipment that sets up the first service; and determining the second scheduling priority of the first service according to the weight factor of the first service and the first scheduling priority of the first service, where the second scheduling priority of the first service is directly proportional to the weight factor of the first service.

With reference to the second aspect to the second possible implementation manner, in a third possible implementation manner, the acquiring a first scheduling priority of a first service includes:

determining the first scheduling priority of the first service according to any one of or a combination of instantaneous channel information, average channel information, quality of service QoS information, and initial packet delay information of the first service; or
acquiring the first scheduling priority that is preset for the first service.

With reference to the second aspect to the third possible implementation manner, in a fourth possible implementation manner, the scheduling the first service according to the second scheduling priority includes:

scheduling the first service and allocating a system resource within a scheduling period in descending order of the second scheduling priority.

With reference to the fourth possible implementation manner of the second aspect, in a fifth possible implementation manner, after the scheduling the first service and allocating a system resource within a scheduling period in descending order of the second scheduling priority, and before a next scheduling period arrives, the method further includes determining the second scheduling priority of the first service again.

With reference to the second aspect to the second possible implementation manner, in a sixth possible implementation manner, the air interface transmission capability of the user equipment is either of or a combination of instantaneous channel information of the user equipment and average channel information of the user equipment.

According to a third aspect, a device is provided, including a processor and a memory, where
the processor is configured to read a program that is preset in the memory, and execute, according to the program, the following process:

acquiring a first scheduling priority of a first service;
determining a second scheduling priority of the first service according to a data volume of the first service in a send buffer, an air interface transmission capability of user equipment that sets up the first service, and the first scheduling priority of the first service; and
scheduling the first service according to the second scheduling priority.

Based on the foregoing technical solutions, in the embodiments of the present invention, a second scheduling priority of a service is determined according to a data volume of the service in a send buffer, an air interface transmission capability of user equipment that sets up the service, and a first scheduling priority of the service, and the service is scheduled according to the second scheduling priority. Therefore, in a non-full buffer scenario, both the data volume of the service in the send buffer and the air interface transmission capability of the user equipment that sets up the service are considered to determine the second scheduling priority, so that when the service is scheduled according to the second scheduling priority, a user-perceived rate can be effectively improved, and user experience is further improved.

BRIEF DESCRIPTION OF DRAWINGS

FIG. 1 is a schematic diagram of existing service scheduling;
FIG. 2 is a schematic principle diagram of an existing scheduler;
FIG. 3 is a schematic structural diagram of a service scheduling apparatus according to an embodiment of the present invention;
FIG. 4 is a schematic structural diagram of a device according to an embodiment of the present invention;
FIG. 5 is a schematic flowchart of service scheduling according to an embodiment of the present invention;
FIG. 6 is a schematic timing diagram of performing, according to a first scheduling priority, service scheduling;
FIG. 7 is a schematic timing diagram of performing, according to a second scheduling priority, service scheduling according to an embodiment of the present invention; and
FIG. 8 is a schematic diagram of service scheduling according to an embodiment of the present invention.

**DESCRIPTION OF EMBODIMENTS**

To make the objectives, technical solutions, and advantages of the present invention clearer, the following further describes the present invention in detail with reference to the accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

A non-full buffer scenario prevails in an actual wireless network. A quantity of packets and a length of a packet of a service are both finite. In the non-full buffer scenario, a user-perceived rate is defined as a total quantity of bits of a burst service being divided by a time required to transmit the burst service. The time required to transmit the burst service refers to: a time when a first packet of the burst service reaches a send buffer of a base station or user equipment is used as a start time $T_{start}$, and a time when a last packet of the burst service is correctly received is used as an end time $T_{end}$, and the time required to transmit the burst service is $T_{end} - T_{start}$.

In the following embodiments, under a circumstance that scheduling is performed and a system resource is allocated according to each user equipment, a scheduling priority may also be for the user equipment. In a multi-carrier system, a same service may have a different scheduling priority in a different subchannel. Under this circumstance, a scheduling priority of a service may be for a specific subchannel. In the following embodiments, the service is used as a basic unit of scheduling for description. A process of using the user equipment or the subchannel of the service as a unit to perform scheduling is the same as a process of using the service as a unit to perform scheduling. A person skilled in the art should understand that all scenarios in which scheduling needs to be performed according to the scheduling priority, technical solutions provided by the following embodiments may be applied.

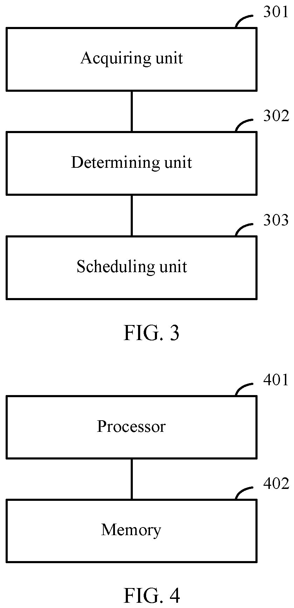

In this embodiment of the present invention, as shown in FIG. 3, a service scheduling apparatus mainly includes:

an acquiring unit 301, configured to acquire a first scheduling priority of a first service;
a determining unit 302, configured to determine a second scheduling priority of the first service according to a data volume of the first service in a send buffer, an air interface transmission capability of user equipment that sets up the first service, and the first scheduling priority of the first service; and
a scheduling unit 303, configured to schedule the first service according to the second scheduling priority.

The second scheduling priority of the first service is inversely proportional to the data volume of the first service in the send buffer, is directly proportional to the air interface transmission capability of the user equipment that sets up the first service, and is directly proportional to the first scheduling priority of the service;
or,
the second scheduling priority of the first service is inversely proportional to the data volume of the first service in the send buffer, and is directly proportional to the air interface transmission capability of the user equipment that sets up the first service.

Preferably, the determining unit 302 is specifically configured to:

determine a weight factor of the first service according to the data volume of the first service in the send buffer, and the air interface transmission capability of the user equipment that sets up the first service, where the weight factor of the first service is inversely proportional to the data volume of the first service in the send buffer, and is directly proportional to the air interface transmission capability of the user equipment that sets up the first service; and determine the second scheduling priority of the first service according to the weight factor of the first service and the first scheduling priority of the first service, where the second scheduling priority of the first service is directly proportional to the weight factor of the first service.

Preferably, the acquiring unit 301 is specifically configured to:

determine the first scheduling priority of the first service according to any one of or a combination of instantaneous channel information, average channel information, quality of service QoS information, and initial packet delay information of the first service; or
acquire the first scheduling priority that is preset for the first service.

Preferably, the scheduling unit 303 is specifically configured to:

schedule the first service and allocate a system resource within a scheduling period in descending order of the second scheduling priority.

Preferably, the determining unit 302 is further configured to:

after the scheduling unit 303 schedules the first service and allocates the system resource within the scheduling period in descending order of the second scheduling priority, and before a next scheduling period arrives, determine the second scheduling priority of the first service again.

Based on a same inventive concept, as shown in FIG. 4, an embodiment of the present invention further provides a device. The device mainly includes a processor 401 and a memory 402. The processor 401 is configured to read a program that is preset in the memory 402, and execute, according to the program, the following process:

acquiring a first scheduling priority of a first service;
determining a second scheduling priority of the first service according to a data volume of the first service in a send buffer, an air interface transmission capability of user equipment that sets up the first service, and the first scheduling priority of the first service; and
scheduling the first service according to the second scheduling priority.

The second scheduling priority of the first service is inversely proportional to the data volume of the first service in the send buffer, is directly proportional to the air interface transmission capability of the user equipment that sets up the first service, and is directly proportional to the first scheduling priority of the service;
or,
the second scheduling priority of the first service is inversely proportional to the data volume of the first service in the send buffer, and is directly proportional to the air interface transmission capability of the user equipment that sets up the first service.

Preferably, the processor 401 determines a weight factor of the first service according to the data volume of the first service in the send buffer, and the air interface transmission capability of the user equipment that sets up the first service, where the weight factor of the first service is inversely proportional to the data volume of the first service in the send buffer, and is directly proportional to the air interface transmission capability of the user equipment that sets up the first service; and
determines the second scheduling priority of the first service according to the weight factor of the first service and the first scheduling priority of the first service, where the second scheduling priority of the first service is directly proportional to the weight factor of the first service.

Preferably, the processor 401 determines the first scheduling priority of the first service according to any one of or a combination of instantaneous channel information, average channel information, quality of service QoS information, and initial packet delay information of the first service; or
acquires the first scheduling priority that is preset for the first service.

Preferably, the processor 401 schedules the first service and allocates a system resource within a scheduling period in descending order of the second scheduling priority.

Preferably, after the processor 401 schedules the first service and allocates the system resource within the scheduling period in descending order of the second scheduling priority, and before a next scheduling period arrives, the second scheduling priority of the first service is determined again.

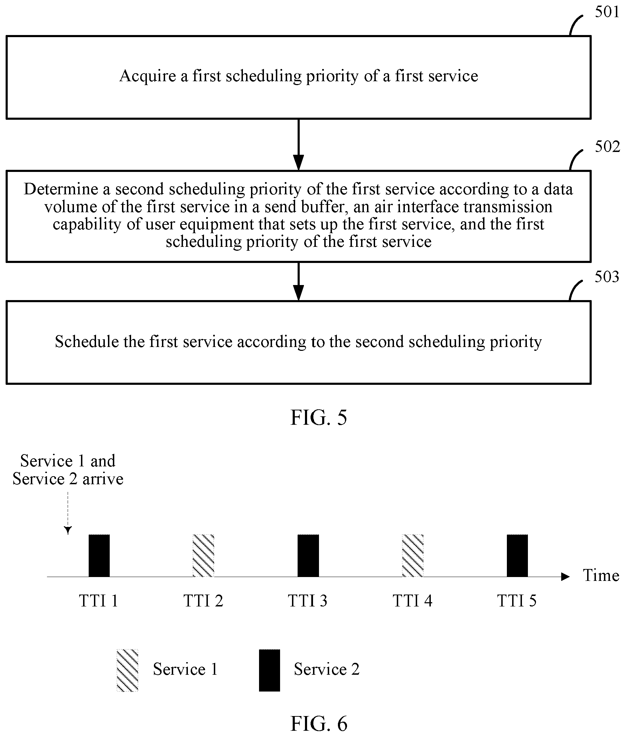

Based on a same inventive concept, in this embodiment of the present invention, as shown in FIG. 5, a detailed method procedure of performing service scheduling is as follows:

Step 501: Acquire a first scheduling priority of a first service.

When there are multiple services, a first scheduling priority of each service is separately acquired. A manner of acquiring the scheduling priority of each service is the same as a manner of acquiring the first scheduling priority of the first service.

The first scheduling priority of the first service can be acquired in multiple manners, which include but are not limited to:

determining the first scheduling priority of the first service according to any one of or a combination of instantaneous channel information (an instantaneous rate), average channel information (an average rate), quality of service (QoS) information, and initial packet delay information of the first service; or

acquiring the first scheduling priority that is preset for the first service.

During specific implementation, the first scheduling priority of the first service may be obtained through calculation by using a classical scheduling algorithm such as a PF scheduling algorithm, a Max-Rate scheduling algorithm, a Round Robin scheduling algorithm, an M-LWDF scheduling algorithm, and an EXP/PF scheduling algorithm. The first scheduling priority of the first service may further be obtained through calculation by using a variation algorithm of a classical scheduling algorithm. The first scheduling priority of the first service may also be specified in advance.

The first scheduling priority may be any positive constant, for example, the first scheduling priority is $Priority_i = 1$.

The present invention does not limit the manner of acquiring the first scheduling priority of the first service. All manners of acquiring the first scheduling priority of the first service that are obtained by a person skilled in the art without creative efforts can be applied to the present invention.

Step 502: Determine a second scheduling priority of the first service according to a data volume of the first service in a send buffer, an air interface transmission capability of user equipment that sets up the first service, and the first scheduling priority of the first service.

When there are multiple services, a manner of determining the second scheduling priority of each service is the same as a manner of determining the second scheduling priority of the first service.

The second scheduling priority of the first service is inversely proportional to the data volume of the first service in the send buffer, is directly proportional to the air interface transmission capability of the user equipment that sets up the first service, and is directly proportional to the first scheduling priority of the first service; or,

the second scheduling priority of the first service is inversely proportional to the data volume of the first service in the send buffer, and is directly proportional to the air interface transmission capability of the user equipment that sets up the first service.

Specifically, when the first scheduling priority of the first service is any preset positive constant, the second scheduling priority of the first service is inversely proportional to the data volume of the first service in the send buffer, and is directly proportional to the air interface transmission capability of the user equipment that sets up the first service.

During specific implementation, the data volume of the first service in the send buffer specifically refers to: a quantity of data bits, waiting to be transmitted for the first service, in a buffer on a base station side during downlink transmission, or a quantity of data bits, waiting to be transmitted for the first service, in a buffer on a user equipment side during uplink transmission.

The air interface transmission capability of the user equipment may be specifically either of or a combination of instantaneous channel information (an instantaneous rate) and average channel information (an average rate).

Preferably, a weight factor of the first service is determined according to the data volume of the first service in the send buffer, and the air interface transmission capability of the user equipment that sets up the first service, where the weight factor of the first service is inversely proportional to the data volume of the first service in the send buffer, and is directly proportional to the air interface transmission capability of the user equipment that sets up the first service; and

the second scheduling priority of the first service is determined according to the weight factor of the first service and the first scheduling priority of the first service, where the second scheduling priority of the first service is directly proportional to the weight factor of the first service.

In this embodiment of the present invention, a specific conversion relationship between the weight factor and the data volume in the send buffer and between the weight factor and the air interface transmission capability of the user equipment is not limited, and as long as the weight factor is inversely proportional to the data volume of the service in the send buffer, and is directly proportional to the air interface transmission capability of the user equipment that sets up the service, a method can be applied to the present invention.

For example, the weight factor of a service $i$ is represented as $\rho_i$, the data volume of the service $i$ in the send buffer is represented as $\psi_i$, the air interface transmission capability of the user equipment that sets up the service $i$ is represented as $\gamma_i$, and the weight factor may be represented by a formula:

$$\rho_i = c \times \frac{(\gamma_i)^a}{(\psi_i)^b} + e \qquad \rho_i = c \times (\gamma_i)^a + \frac{d}{(\psi_i)^b} + e \qquad \rho_i = c \times \frac{\sqrt[a]{\gamma_i}}{\sqrt[b]{\psi_i}} + e$$

$$\rho_i = c \times \sqrt[a]{\gamma_i} + \frac{d}{\sqrt[b]{\psi_i}} + e \qquad \rho_i = c \times \frac{\log_a(\gamma_i)}{\log_b(\psi_i)} + e \qquad \rho_i = c \times \log_a(\gamma_i) + \frac{d}{\log_b(\psi_i)} + e$$

$$\rho_i = c \times \frac{a^{\gamma_i}}{b^{\psi_i}} + e \qquad \rho_i = c \times a^{\gamma_i} + \frac{d}{b^{\psi_i}} + e \quad \text{or the like, where } a, b, c, \text{ and } d \text{ are positive real numbers other}$$

than 0, and $e$ is a real number. This is for an illustrative purpose only. During specific implementation, a relationship between the weight factor and the data volume of the service in the send buffer and between the weight factor and the air interface transmission capability of the user equipment is not limited thereto.

Similarly, in this embodiment of the present invention, a specific conversion relationship between the second scheduling priority and the weight factor and between the second scheduling priority and the first scheduling priority is not limited, and as long as the second scheduling priority is directly proportional to the weight factor, and is directly proportional to the first scheduling priority, a method can be applied to the present invention.

For example, the weight factor of the service $i$ is represented as $\rho_i$, the first scheduling priority of the service $i$ is represented as Priority$_i$, the second scheduling priority of the service $i$ is represented as $\text{Priority}_i^*$, and the second scheduling priority may be represented by a formula: $\text{Priority}_i^* = c \times (\text{Priority}_i)^a \times (\rho_i)^b + e$,

$$\text{Priority}_i^* = c \times (\text{Priority}_i)^a + d \times (\rho_i)^b + e \qquad \text{Priority}_i^* = c \times \sqrt[a]{\text{Priority}_i} \times \sqrt[b]{\rho_i} + e$$

$$\text{Priority}_i^* = c \times \sqrt[a]{\text{Priority}_i} + d \times \sqrt[b]{\rho_i} + e \qquad \text{Priority}_i^* = c \times \log_a(\text{Priority}_i) \times \log_b(\rho_i) + e$$

$$\text{Priority}_i^* = c \times \log_a(\text{Priority}_i) + d \times \log_b(\rho_i) + e \qquad \text{Priority}_i^* = c \times a^{\text{Priority}_i} \times b^{\rho_i} + e$$

$$\text{Priority}_i^* = c \times a^{\text{Priority}_i} + d \times b^{\rho_i} + e \quad \text{or the like, where } a, b, c, \text{ and } d \text{ are positive real numbers other than 0,}$$

and $e$ is a real number. This is for an illustrative purpose only. During specific implementation, a relationship between the second scheduling priority and the first scheduling priority and between the second scheduling priority and the weight factor is not limited thereto.

Step 503: Schedule the first service according to the second scheduling priority.

Preferably, the first service is scheduled and a system resource is allocated within a current scheduling period in descending order of the second scheduling priority. When there are multiple services to be scheduled, in the multiple services to be scheduled, user equipment with a higher second scheduling priority is preferentially scheduled and is preferentially allocated a system resource.

Preferably, after the first service is scheduled and a system resource is allocated within a current scheduling period in descending order of the second scheduling priority, and before a next scheduling period arrives, the second scheduling priority of the first service is determined again. When a next scheduling period arrives, the first service is scheduled and a system resource is allocated within the scheduling period according to a second scheduling priority determined again.

A manner of scheduling a service by using a first scheduling priority obtained by using an existing scheduling algorithm and a manner of performing scheduling by using a second scheduling priority in the embodiments of the present invention are compared and described below by using a first specific embodiment.

In the first specific embodiment, assuming that there are two services in a cell, and data of the two services reaches a send buffer simultaneously, a scheduler schedules one service to perform data transmission using a channel resource of system-wide bandwidth within each transmission time interval (transmission time interval, TTI). Assuming that a service 1 has 1000 bits (bit), and both the data volume in the send buffer and the air interface transmission capability are taken into consideration, two TTIs need to be used to complete data transmission for the service 1. Assuming that a service 2 also has 1000 bits, and both the data volume in the send buffer and the air interface transmission capability are taken into consideration, three TTIs need to be used to complete data transmission for the service 2. For simplicity, here assuming that once the data of the service is scheduled, the data is immediately correctly received. That is, a delay between the scheduler and a receiver is zero TTI. Certainly, it may also be assumed here that the delay between the scheduler and the receiver is another fixed value, and the conclusion is not affected.

In the first specific embodiment, if the data volume of the service in the send buffer and the air interface transmission capability of the user equipment are not considered together, the first scheduling priority is calculated by using an existing scheduling algorithm. A typical scheduling sequence diagram when scheduling is performed according to the first scheduling priority is shown in FIG. 6:

The data of the service 1 and the service 2 simultaneously arrive within a TTI 1, and the service 1 is scheduled within a TTI 2 and a TTI 4 (two TTIs are needed for transmission for the service 1, and therefore, after the service 1 is fully scheduled within the TTI 4, a total transmission time of the service 1 is TTI 1 to TTI 4). The service 2 is scheduled within the TTI 1, a TTI 3, and a TTI 5 (three TTIs are needed for transmission for the service 2, and therefore, the service 2 is fully scheduled within the TTI 5, and a total transmission time of the service 2 is TTI 1 to TTI 5). Four TTIs are occupied to complete the data transmission for the service 1, and five TTIs are occupied to complete the data transmission for the service 2. It is obtained through calculation according to a calculation formula of a user-perceived rate that is given above in the 3GPP that a user-perceived rate $PerceivedRate_{Service1}$ of the service 1 and a user-perceived rate $PerceivedRate_{Service2}$ of the service 2 are represented as:

$$PerceivedRate_{Service1} = \frac{1000}{4} = 250 \text{ bit/TTI} = 250 \text{ Kbit/s}$$

$$PerceivedRate_{Service2} = \frac{1000}{5} = 200 \text{ bit/TTI} = 200 \text{ Kbit/s} \tag{8}$$

respectively.

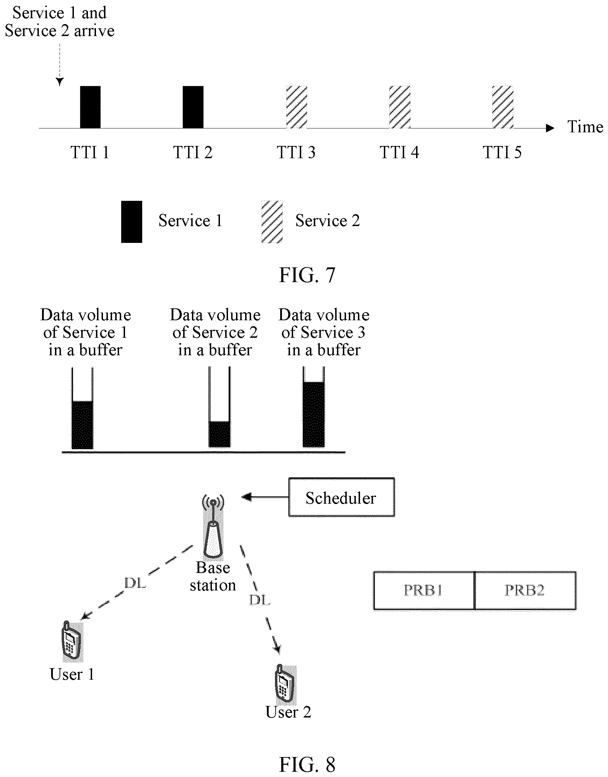

In the first specific embodiment, if both the data volume of the service in the send buffer and the air interface transmission capability of the user equipment are considered, that is, scheduling is performed according to the second scheduling priority, a service with a shortest transmission time is preferentially scheduled. A scheduling sequence diagram is shown in FIG. 7. Two TTIs are occupied to complete the data transmission for the service 1, and five TTIs are occupied to complete the data transmission for the service 2. It can be known that a user-perceived rate $PerceivedRate^{*}_{Service1}$ of the service 1 and a user-perceived rate $PerceivedRate^{*}_{Service2}$ of the service 2 are represented as:

$$PerceivedRate^{*}_{Service1} = \frac{1000}{2} = 500 \text{ bit/TTI} = 500 \text{ Kbit/s}$$

$$PerceivedRate^{*}_{Service2} = \frac{1000}{5} = 200 \text{ bit/TTI} = 200 \text{ Kbit/s} \tag{9}$$

respectively.

It can be known through the comparison in the first specific embodiment that compared with the manner of scheduling a service by using a first scheduling priority obtained by using an existing scheduling algorithm, the manner of scheduling a service by using a second scheduling priority obtained by considering both a data volume of a service in a send buffer and an air interface transmission capability of user equipment can improve the user-perceived rate.

In the following second specific embodiment, description is made by using LTE downlink scheduling as an example.

In the second specific embodiment, as shown in FIG. 8, assuming that in a system, there are two physical resource blocks (Physical Resource Block, PRB): PRB1 and PRB2. A mobile station MS1 sets up two services Service1 and Service2. MS2 sets up one service Service3. Rate and data volume information of each service are shown in Table 1, where $r_{MS1,PRB1}(t)$ represents an instantaneous rate of the user equipment MS 1 on PRB 1, $r_{MS1,PRB2}(t)$ represents an instantaneous rate of the user equipment MS1 on PRB2, $r_{MS2,PRB1}(t)$ represents an instantaneous rate of the user equipment MS2 on PRB1, $r_{MS2,PRB2}(t)$ represents an instantaneous rate of the user equipment MS2 on PRB2; and $r_{Service1,PRB1}(t)$ represents an instantaneous rate of the service Service 1 on PRB1, $r_{Service1,PRB2}(t)$ represents an instantaneous rate of the service Service1 on PRB2, $r_{Service2,PRB1}(t)$ represents an instantaneous rate of the service Service2 on PRB1, $r_{Service2,PRB2}(t)$ represents an instantaneous rate of the service Service2 on PRB2, $r_{Service3,PRB1}(t)$ represents an instantaneous rate of the service Service3 on PRB1, $r_{Service3,PRB2}(t)$ represents an instantaneous rate of the service Service3 on PRB2, $R_{Service1}(t)$ represents an average rate of Service1, $R_{Service}(t)$ represents an average rate of Service2, and $R_{Service3}(t)$ represents an average rate of Service3.

Table 1

|  | MS1 | | MS2 |
| --- | --- | --- | --- |
|  | Service1 | Service2 | Service3 |
| Downlink send buffer data volume | $\psi_{Ms1,Service1} = 10000\ bit$ | $\psi_{MS1,Service2} = 8000\ bit$ | $\psi_{MS2,Service3} = 24000\ bit$ |
| Downlink instantaneous rate | $r_{Service1,PRB1}(t) = r_{MS1,PRB1}(t)$ $r_{Service1,PRB2}(t) = r_{MS1,PRB2}(t)$ | $r_{Service2,PRB1}(t) = r_{MS1,PRB1}(t)$ $r_{Service2,PRB2}(t) = r_{MS1,PRB2}(t)$ | $r_{Service3,PRB1}(t) = r_{MS2,PRB1}(t)$ $r_{Service3,PRB2}(t) = r_{MS2,PRB2}(t)$ |
| Downlink average rate | $R_{Service1}(t) = 300kbit/s$ | $R_{Service2}(t) = 300kbit/s$ | $R_{Service3}(t) = 400kbit/s$ |

In the second specific embodiment, the first scheduling priority Priority$_i$ is acquired according to any one of or a combination of instantaneous channel information, average channel information, QoS information of a service, and initial packet delay information of the service. For example, first scheduling priorities of the services Service1, Service2, and Service3 that are separately on PRB1 and PRB2 are calculated by using the PF algorithm.

The first scheduling priority of Service1 on PRB1 is:

$$\text{Priority}_{Service1,PRB1} = \frac{r_{Service1,PRB1}(t)}{R_{Service1}(t)} = \frac{200}{300} = \frac{2}{3} \qquad (10).$$

The first scheduling priority of Service2 on PRB1 is:

$$\text{Priority}_{Service2,PRB1} = \frac{r_{Service2,PRB1}(t)}{R_{Service2}(t)} = \frac{200}{300} = \frac{2}{3} \qquad (11).$$

The first scheduling priority of Service3 on PRB1 is:

$$\text{Priority}_{Service3,PRB1} = \frac{r_{Service3,PRB1}(t)}{R_{Service3}(t)} = \frac{500}{400} = \frac{5}{4} \qquad (12).$$

The first scheduling priority of Service1 on PRB2 is:

$$\text{Priority}_{Service1,PRB2} = \frac{r_{Service1,PRB2}(t)}{R_{Service1}(t)} = \frac{400}{300} = \frac{4}{3} \quad (13).$$

The first scheduling priority of Service2 on PRB2 is:

$$\text{Priority}_{Service2,PRB2} = \frac{r_{Service2,PRB2}(t)}{R_{Service2}(t)} = \frac{400}{300} = \frac{4}{3} \quad (14).$$

The first scheduling priority of Service3 on PRB2 is:

$$\text{Priority}_{Service3,PRB2} = \frac{r_{Service3,PRB2}(t)}{R_{Service3}(t)} = \frac{300}{400} = \frac{3}{4} \quad (15).$$

A weight factor $\rho_i$ is obtained through calculation according to a data volume of a service in a send buffer and a real transmission capability of user equipment that sets up the service. In a specific embodiment, an instantaneous rate of the service is used to represent the real transmission capability of user equipment. A calculation formula of the weight factor is:

$$\rho_i = \frac{r_i(t)}{\psi_i} \quad (16).$$

Weight factors $\rho_{Service1}$, $\rho_{Service2}$, and $\rho_{Sercice3}$ of services Service1, Service2, and Service3 can be obtained as follows:

$$\rho_{Service1} = \frac{300}{10000} = \frac{3}{100} \quad (17);$$

$$\rho_{Service2} = \frac{300}{8000} = \frac{3}{80} \quad (18);$$

and

$$\rho_{Service2} = \frac{400}{24000} = \frac{1}{60} \quad (19).$$

The second scheduling priority $\text{Priority}_i^*$ of the service is obtained according to the first scheduling priority $\text{Priority}_i$ of the service and the weight factor $\rho_i$ of the service. In the specific embodiment, assuming that a calculation formula of the second scheduling priority is:

$$\text{Priority}_i^* = \text{Priority}_i \times \rho_i \quad (20),$$

second scheduling priorities of services Service1, Service2, and Service3 that are separately on PRB1 and PRB2 can be obtained.

The second scheduling priority of Service1 on PRB1 is:

$$Priority^*_{Service1,PRB1} = Priority_{Service1,PRB1} \times \rho_{Service1} = \frac{2}{3} \times \frac{3}{100} = \frac{1}{50} \qquad (21).$$

The second scheduling priority of Service2 on PRB1 is:

$$Priority^*_{Service2,PRB1} = Priority_{Service2,PRB1} \times \rho_{Service2} = \frac{2}{3} \times \frac{3}{80} = \frac{1}{40} \qquad (22).$$

The second scheduling priority of Service3 on PRB1 is:

$$Priority^*_{Service3,PRB1} = Priority_{Service3,PRB1} \times \rho_{Service3} = \frac{5}{4} \times \frac{1}{60} = \frac{1}{48} \qquad (23).$$

The second scheduling priority of Service1 on PRB2 is:

$$Priority^*_{Service1,PRB2} = Priority_{Service1,PRB2} \times \rho_{Service1} = \frac{4}{3} \times \frac{3}{100} = \frac{1}{25} \qquad (24).$$

The second scheduling priority of Service2 on PRB2 is:

$$Priority^*_{Service2,PRB2} = Priority_{Service2,PRB2} \times \rho_{Service2} = \frac{4}{3} \times \frac{3}{80} = \frac{1}{20} \qquad (25).$$

The second scheduling priority of Service3 on PRB2 is:

$$Priority^*_{Service3,PRB2} = Priority_{Service3,PRB2} \times \rho_{Service3} = \frac{3}{4} \times \frac{1}{60} = \frac{1}{80} \qquad (26).$$

Each service is scheduled and is allocated a system resource according to the second scheduling priority $Priority^*_i$ $Priority^*_{Service2,PRB1} > Priority^*_{Service3,PRB1} > Priority^*_{Service1,PRB1}$, and therefore PRB1 is preferentially allocated to the service Service2; $Priority^*_{Service2,PRB2} > Priority^*_{Service1,PRB2} > Priority^*_{Service3,PRB2}$, and therefore PRB2 is preferentially allocated to the service Service2.

Based on the foregoing technical solutions, in the embodiments of the present invention, a second scheduling priority of a service is determined according to a data volume of the service in a send buffer, an air interface transmission capability of user equipment that sets up the service, and a first scheduling priority of the service, and the service is scheduled according to the second scheduling priority. Therefore, in a non-full buffer scenario, both the data volume of the service in the send buffer and the air interface transmission capability of the user equipment that sets up the service are considered to determine the second scheduling priority, so that when the service is scheduled according to the second scheduling priority, a user-perceived rate can be effectively improved, and user experience is further improved.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1.    A service scheduling apparatus, comprising:

an acquiring unit, configured to acquire a first scheduling priority of a first service;
a determining unit, configured to determine a second scheduling priority of the first service according to a data volume of the first service in a send buffer, an air interface transmission capability of user equipment that sets up the first service, and the first scheduling priority of the first service; and
a scheduling unit, configured to schedule the first service according to the second scheduling priority.

2.    The apparatus according to claim 1, wherein the second scheduling priority of the first service is inversely proportional to the data volume of the first service in the send buffer, is directly proportional to the air interface transmission capability of the user equipment that sets up the first service, and is directly proportional to the first scheduling priority of the service;
or,
the second scheduling priority of the first service is inversely proportional to the data volume of the first service in the send buffer, and is directly proportional to the air interface transmission capability of the user equipment that sets up the first service.

3.    The apparatus according to claim 2, wherein the determining unit is specifically configured to:

determine a weight factor of the first service according to the data volume of the first service in the send buffer, and the air interface transmission capability of the user equipment that sets up the first service, wherein the weight factor of the first service is inversely proportional to the data volume of the first service in the send buffer, and is directly proportional to the air interface transmission capability of the user equipment that sets up the first service; and

determine the second scheduling priority of the first service according to the weight factor of the first service and the first scheduling priority of the first service, wherein the second scheduling priority of the first service is directly proportional to the weight factor of the first service.

4. The apparatus according to any one of claims 1 to 3, wherein the acquiring unit is specifically configured to:

determine the first scheduling priority of the first service according to any one of or a combination of instantaneous channel information, average channel information, quality of service QoS information, and initial packet delay information of the first service; or
acquire the first scheduling priority that is preset for the first service.

5. The apparatus according to any one of claims 1 to 4, wherein the scheduling unit is specifically configured to:

schedule the first service and allocate a system resource within a scheduling period in descending order of the second scheduling priority.

6. The apparatus according to claim 5, wherein the determining unit is further configured to:

after the scheduling unit schedules the first service and allocates the system resource within the scheduling period in descending order of the second scheduling priority, and before a next scheduling period arrives, determine the second scheduling priority of the first service again.

7. The apparatus according to any one of claims 1 to 3, wherein the air interface transmission capability of the user equipment is either of or a combination of instantaneous channel information of the user equipment and average channel information of the user equipment.

8. A service scheduling method, comprising:

acquiring a first scheduling priority of a first service;
determining a second scheduling priority of the first service according to a data volume of the first service in a send buffer, an air interface transmission capability of user equipment that sets up the first service, and the first scheduling priority of the first service; and
scheduling the first service according to the second scheduling priority.

9. The method according to claim 8, wherein the second scheduling priority of the first service is inversely proportional to the data volume of the first service in the send buffer, is directly proportional to the air interface transmission capability of the user equipment that sets up the first service, and is directly proportional to the first scheduling priority of the service;
or,
the second scheduling priority of the first service is inversely proportional to the data volume of the first service in the send buffer, and is directly proportional to the air interface transmission capability of the user equipment that sets up the first service.

10. The method according to claim 9, wherein the determining a second scheduling priority of the first service according to a data volume of the first service in a send buffer, an air interface transmission capability of user equipment that sets up the first service, and the first scheduling priority of the first service comprises:

determining a weight factor of the first service according to the data volume of the first service in the send buffer, and the air interface transmission capability of the user equipment that sets up the first service, wherein the weight factor of the first service is inversely proportional to the data volume of the first service in the send buffer, and is directly proportional to the air interface transmission capability of the user equipment that sets up the first service; and
determining the second scheduling priority of the first service according to the weight factor of the first service and the first scheduling priority of the first service, wherein the second scheduling priority of the first service is directly proportional to the weight factor of the first service.

11. The method according to any one of claims 8 to 10, wherein the acquiring a first scheduling priority of a first service comprises:

determining the first scheduling priority of the first service according to any one of or a combination of instantaneous channel information, average channel information, quality of service QoS information, and initial packet delay information of the first service; or

acquiring the first scheduling priority preset for the first service.

12. The method according to any one of claims 8 to 11, wherein the scheduling the first service according to the second scheduling priority comprises:

scheduling the first service and allocating a system resource within a scheduling period in descending order of the second scheduling priority.

13. The method according to claim 12, wherein after the scheduling the first service and allocating a system resource within a scheduling period in descending order of the second scheduling priority, and before a next scheduling period arrives, the method further comprises determining the second scheduling priority of the first service again.

14. The method according to any one of claims 8 to 10, wherein the air interface transmission capability of the user equipment is either of or a combination of instantaneous channel information of the user equipment and average channel information of the user equipment.

15. A device, comprising a processor and a memory, wherein
the processor is configured to read a program that is preset in the memory, and execute, according to the program, the following process:

acquiring a first scheduling priority of a first service;
determining a second scheduling priority of the first service according to a data volume of the first service in a send buffer, an air interface transmission capability of user equipment that sets up the first service, and the first scheduling priority of the first service; and
scheduling the first service according to the second scheduling priority.

Service 1  Service 2          Service N

Scheduler

Service scheduling
algorithm of uplink or
downlink services

Base station

UL
DL

DL
UL

User K

UL DL

User 1

User 2

FIG. 1

Instantaneous
channel
information

Average channel
information

Scheduling algorithm

First scheduling
priority of the service

QoS information
of a service

Initial packet delay
information of the
service

FIG. 2

301

Acquiring unit

302

Determining unit

303

Scheduling unit

FIG. 3

401

Processor

402

Memory

FIG. 4

501

Acquire a first scheduling priority of a first service

502

Determine a second scheduling priority of the first service according to a data volume of the first service in a send buffer, an air interface transmission capability of user equipment that sets up the first service, and the first scheduling priority of the first service

503

Schedule the first service according to the second scheduling priority

FIG. 5

Service 1 and
Service 2 arrive

TTI 1    TTI 2    TTI 3    TTI 4    TTI 5    Time

Service 1    Service 2

FIG. 6

Service 1 and
Service 2 arrive

TTI 1    TTI 2    TTI 3    TTI 4    TTI 5    Time

Service 1    Service 2

## FIG. 7

Data volume
of Service 1
in a buffer

Data volume
of Service 2
in a buffer

Data volume
of Service 3
in a buffer

Scheduler

Base
station

DL

DL

PRB1    PRB2

User 1

User 2

## FIG. 8

| INTERNATIONAL SEARCH REPORT | International application No. |
|---|---|
| | PCT/CN2014/092240 |

**A. CLASSIFICATION OF SUBJECT MATTER**

H04W 72/12 (2009.01) i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CPRSABS; CNTXT; CNKI; VEN: service, UE, PRI, SPI, scheduling priority, adjust+

**C. DOCUMENTS CONSIDERED TO BE RELEVANT**

| Category* | Citation of document, with indication, where appropriate, of the relevant passages | Relevant to claim No. |
|---|---|---|
| Y | CN 102164417 A (NTT DOCOMO INC.) 24 August 2011 (24.08.2011) description, paragraphs [0009] to [0013] and [0054] to [0080] | 1-15 |
| Y | CN 102264143 A (TD TECH. CO., LTD.) 30 November 2011 (30.11.2011) description, paragraphs [0011] to [0029] | 1-15 |
| A | CN 103974436 A (DATANG MOBILE COMMUNICATIONS EQUIPMENT CO., LTD.) 06 August 2014 (06.08.2014) the whole document | 1-15 |
| A | CN 102186256 A (SOUTH CHINA UNIVERSITY OF TECHNOLOGY) 14 September 2011 (14.09.2011) the whole document | 1-15 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 August 2015 | 06 September 2015 |

| Name and mailing address of the ISA/CN State Intellectual Property Office of the P. R. China No. 6, Xitucheng Road, Jimenqiao Haidian District, Beijing 100088, China Facsimile No. (86-10) 62019451 | Authorized officer XIA, Caijie Telephone No. (86-10) 62089140 |

Form PCT/ISA /210 (second sheet) (July 2009)

**INTERNATIONAL SEARCH REPORT**
Information on patent family members

| | International application No. |
|---|---|
| | PCT/CN2014/092240 |

| Patent Documents referred in the Report | Publication Date | Patent Family | Publication Date |
|---|---|---|---|
| CN 102164417 A | 24 August 2011 | JP 2011172218 A | 01 September 2011 |
| | | JP 5638970 B2 | 10 December 2014 |
| CN 102264143 A | 30 November 2011 | CN 102264143 B | 13 August 2014 |
| CN 103974436 A | 06 August 2014 | None | |
| CN 102186256 A | 14 September 2011 | None | |

Form PCT/ISA /210 (patent family annex) (July 2009)